# EUROPEAN PATENT SPECIFICATION

(11) **EP 1 280 313 B1**
(45) Date of publication and mention of the grant of the patent: **19.10.2005**
(21) Application number: 02014305.3
(22) Date of filing: 27.06.2002
(51) Int. Cl.: H04L 29/06

(54) **Communication terminal**
Kommunikationsendgerät
Terminal de communication

(30) Priority: 13.07.2001 JP 2001213463
(43) Date of publication of application: 29.01.2003
(73) Proprietor: MITSUBISHI DENKI KABUSHIKI KAISHA, Tokyo 100-8310 (JP)
(72) Inventor: Ishibashi, Koichi, Chiyoda-ku, Tokyo 100-8310 (JP)
(74) Representative: Pfenning, Meinig & Partner GbR

(56) References cited:
- EP-A- 1 051 010
- EP-A- 1 085 774
- WO-A-99/31853
- OHZAHATA, S: "A PROPOSAL OF SEAMLESS HANDOFF METHOD FOR CELLULAR INTERNET ENVIRONMENTS" IEICE TRANSACTIONS ON COMMUNICATIONS, vol. e-84b, no. 4, April 2001 (2001-04), pages 752-759, XP002262830 INSTITUTE OF ELECTRONICS INFORMATION AND COMM. ENG. TOKYO, JP,

## Description

### FIELD OF THE INVENTION

The present invention relates to a communication terminal for a mobile networking system for making it possible to maintain communication quality even though a mobile terminal moves between sub-networks.

### BACKGROUND OF THE INVENTION

In a network in which a plurality of sub-networks are connected to each other, in order to make it possible that a mobile terminal performs communication at various destinations when it moves while being in communication, an "IP Mobility Support" is specified as an IP mobility in "RFC2002".

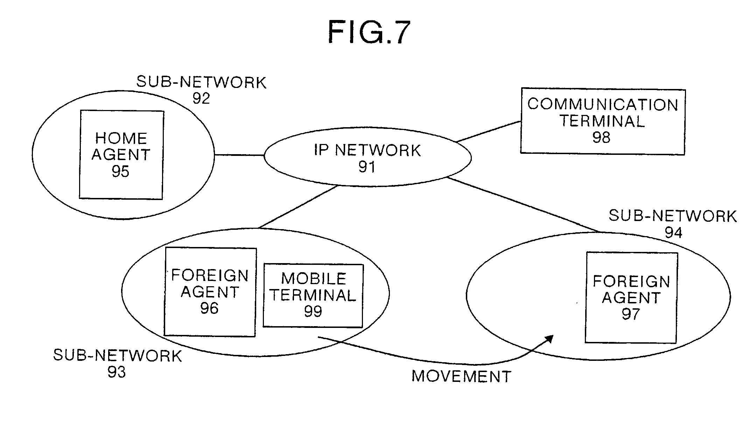

The IP mobility network specified by "RFC2002" is shown in Fig. 7. In Fig. 7, a communication repeater which assists a mobile terminal 99 called a foreign agent 96 exists in a sub-network 93 which supports the mobile terminal 99, and a communication repeater called a home agent 95 is defined for each respective mobile terminals 99.

Each mobile terminal 99 registers present location information (the address or the like of the sub-network 93 in this example) in the home agent 95. Each mobile terminal has a home IP address which is a unique identifier which does not depend on the present location, and the home agent 95 manages the mobile terminal 99 by using the identifier. More specifically, the home agent 95 causes the home IP address of a mobile terminal to correspond to the identifier (address or the like) of the sub-network 93 in which the mobile exists and to manage them. The location information of the mobile terminal 99 is also registered in the foreign agent 96 in the sub-network 93 at which it is located at present and is managed.

In "Route Optimization" specified by "Internet-draft (draft-ietf-mobileip-optim-09.txt)", the following fact is shown. That is, a foreign agent 97 which is a communication repeater at a destination notifies the foreign agent 96 which is a communication repeater at a starting location, the destination of the mobile terminal 99, so that the communication repeater at the starting location transfers a packet addressed to the terminal to a communication repeater at the destination.

As networks which support movement of mobile terminals, not only the configurations obtained by "RFC2002" and "Route Optimization", various proposals are made. For example, with respect to "IPv6", "Mobile IPv6" is specified in "Internet-Draft "draft-ietf-mobileip-ipv6-13. txt"".

In the "Step of transmitting a packet to a wireless device" in Japanese Patent Application Laid-Open No. 2000-183973, a communication repeater which considers movement of a terminal on a network, is disclosed and an optimization technique for tunneling in transfer of a packet from a home agent to a mobile device is disclosed.

In the "Communication method and mobile IP environment" in Japanese Patent Application Laid-Open No. 2000-253069, a signaling technique for maintaining service quantity with respect to a packet addressed to a mobile device is disclosed.

However, in the conventional home agent and the conventional communication repeater described above, when a mobile terminal moves from a sub-network having a narrow communication bandwidth which can be used to a sub-network having a wide communication bandwidth which can be used, the mobile terminal performs communication by using communication bandwidths which can be used at various destinations. When, again, it moves to a sub-network having a narrow communication bandwidth which can be used, the throughput of an IP packet addressed to the mobile terminal considerably changes with the movement of the mobile terminal which is a problem.

A home agent according to a prior art manages a present location of a mobile terminal and performs control which interrupts an IP packet addressed to the mobile terminal and transfers it to the present location. For this reason, when mobile terminals which are managed by the home agent increase in number, or when a connection related to the mobile terminal is monitored by the home agent, the process performed in the home agent is a bottleneck.

EP 1 051 010 A1 describes a method of establishing an IP quality of service session between a correspondent node and a mobile node. This mobile node has a home address in a home network and is temporarily connectable in a foreign network having a foreign agent. IP packets are directed to the mobile node from the correspondent node via the home network. The quality of service session is maintained in dependence on flow identification information in the IP packets.

### SUMMARY OF THE INVENTION

It is an object of the present invention to provide a communication terminal for a mobile networking system for making it possible to maintain communication quality when a home agent which supports a mobile terminal, e.g. a computer, which executes network communication while moving, a communication repeater or a communication terminal transmits an IP packet addressed to the mobile terminal.

This object is solved by the features of claim 1.

Other objects and features of this invention will become apparent from the following description with reference to the accompanying drawings.

### BRIEF DESCRIPTION OF THE DRAWINGS

Fig. 1 is a block diagram which shows an example of a mobile networking system using a communication terminal according to the present invention,
Fig. 2 is a diagram which shows another example of a mobile networking system using a communication terminal according to the present invention,
Fig. 3 is a block diagram which shows an example of a configuration of a home agent 401,
Fig. 4 is a diagram which shows an example of a process sequence in a mobile networking system.
Fig. 5 is a diagram which shows a further example of a mobile networking system using a communication terminal according to the embodiment of the present invention,
Fig. 6 is a diagram which shows an example of a process sequence in a mobile networking system according to the embodiment of Fig. 5, and
Fig. 7 is a diagram which shows an IP mobility network specified by "RFC2002".

### DETAILED DESCRIPTIONS

Embodiments of the mobile networking system using the communication terminal according to the invention will be explained in detail below with reference to the accompanying drawings.

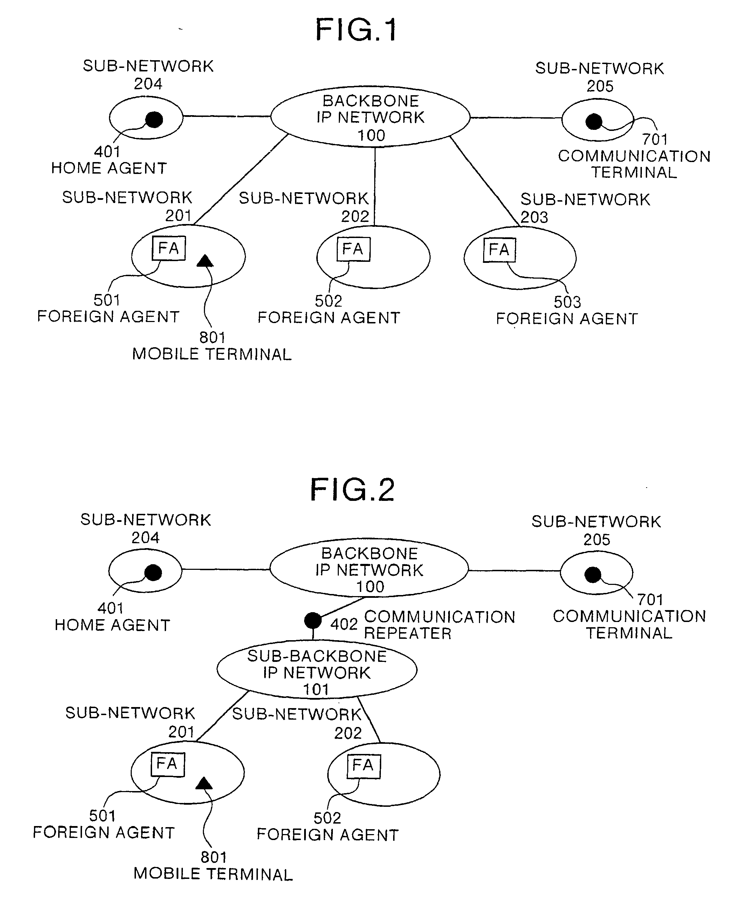

Fig. 1 is a block diagram which shows the network configuration of a mobile networking system using the communication terminal according to the present invention. The diagram shows an example of a mobile networking system which makes it possible to perform communication at destinations to which the mobile terminal moves in a network in which a plurality of sub-networks are connected to each other. It shows an embodiment obtained when the mobility of a mobile terminal is realized by a "Mobile IP" specified by "RF2002".

This mobile networking system is constituted by including a backbone IP network 100 and a plurality of sub-networks 201, 202, 203, 204, and 205. The sub-networks (201, 202, 203, 204, and 205) are connected to the backbone IP network 100 respectively.

The sub-networks (201, 202, and 203) have foreign agents (501, 502, and 503), respectively. The sub-network 204 has a home agent 401. The sub-network 205 has a communication terminal 701.

A mobile terminal 801 is located at the sub-network 201 at the beginning. A home agent 401 which gives IP mobility to the mobile terminal 801 is located at the sub-network 204.

The home agent 401 manages a home IP address which uniquely identifies the mobile terminal 801 and the IP address of the foreign agent 501 which indicates that the mobile terminal 801 is located at the sub-network 201 such that the IP addresses correspond to each other. The location information of the mobile terminal 801 is also registered in the foreign agent 501 in the sub-network 201 at which it is located at present, and is managed.

When an IP packet addressed to the mobile terminal 801 is transmitted, the home agent 401 interrupts the IP packet addressed to the mobile terminal 801, and transfers the interrupted IP packet to the present location (at a first point of time, specified by the IP address of the foreign agent 501 which indicates that the location is at the sub-network 201) by the tunneling method.

The home agent 401 monitors communication qualities such as maximum transfer rates and throughputs of every connection discriminated from each other by combinations of source IP addresses, destination IP addresses, source port numbers, destination port numbers, and the like.

When the mobile terminal 801 moves to the sub-network 202, the mobile terminal 801 registers the IP address of the foreign agent 502 which represents the present location in the home agent 401.

The home agent 401 transfers the interrupted IP packet addressed to the mobile terminal 801 to the foreign agent 502 by the tunneling method.

At this time, for example, when the mobile terminal 801 uses a bandwidth of, e.g., X [bps] in the sub-network 201 before movement of the mobile terminal 801, the home agent 401 transfers the IP packet addressed to the mobile terminal 801 on the basis of the bandwidth of X [bps].

It is assumed, for example, that a bandwidth of Y [bps] (Y [bps] > X [bps]) in the sub-network 202 which is the destination. In such a situation, when the mobile terminal 801 moves to the sub-network 202, the home agent 401 also transfers the IP packet addressed to the mobile terminal 801 according to information (bandwidth of X [bps]) by which the IP packet is transferred when located at the sub-network 201 before the movement.

When a communication bandwidth which can be used by a sub-network is X [bps] > Y [bps], andwhenthemobileterminal 801 moves to the sub-network 202, the home agent 401 transfers the IP packet addressed to the mobile terminal 801 according to a bandwidth of Y [bps] which can be used by the sub-network 202 after the movement.

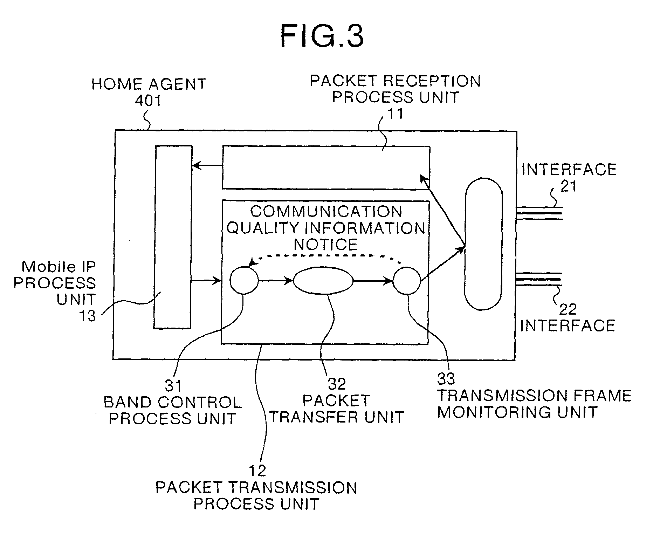

Fig. 3 is a block diagram which shows the configuration of the home agent 401. The home agent 401 is constituted by a plurality of interfaces (21 and 22), a packet reception process unit 11, a packet transmission process unit 12, and a Mobile IP process unit 13.

The packet transmission process unit 12 comprises a bandwidth control process unit 31 which is a bandwidth control unit which performs bandwidth control such that communication quality obtained before movement when an IP packet addressed to the mobile terminal is transferred before and after movement of the mobile terminal between sub-networks, a packet transfer unit 32 which is a packet transmission unit which transfers the IP packet addressed to the mobile terminal to a foreign agent being at the present location, and a transmission frame monitoring unit 33 which is a transmission monitoring unit which monitors the communication quality of a transmission frame every connection when the IP packet addressed to the mobile terminal is transferred. Communication quality information monitored by the transmission frame monitoring unit 33 is notified to the bandwidth control process unit 31 every connection.

The Mobile IP process unit 13 includes functions such as a process for tunneling and a registration process for managing a present location of the mobile terminal, and functions as a present locationmanagement unit which manages the present location of the mobile terminal.

This embodiment describes the monitor of communication quality for the IP packet addressed to the mobile terminal 801 and the bandwidth control in the home agent 401. However, when the communication terminal 701 which communicates with the mobile terminal 801 by the "Route Optimization function" or the like communicates with the mobile terminal 801 mediating the home agent 401, the monitor of the communication quality of the IP packet addressed to the mobile terminal 801 and the bandwidth control can also be performed in the communication terminal 701.

More specifically, the communication terminal 701 may have the same configuration as that of the bandwidth control process unit 31, the packet transmission process unit 12, and the packet transfer unit 32 in Fig. 3, and may execute the same operation.

Like Fig. 1, Fig. 2 shows an example of a mobile networking system which can make it possible to perform communication even though a mobile terminal moves in a network in which a plurality of sub-networks are connected to each other. The mobility of the mobile terminal is realized by "Mobile IP" specified by "RFC2002".

This mobile networking system includes a backbone IP network 100 and a sub-backbone IP network 101. The backbone IP network 100 and the sub-backbone IP network 101 are connected by a communication repeater 402.

In a specific communication repeater such as repeating node in the network (for example, the communication repeater 402), as described above, monitor of the communication quality of the IP packet addressed to the mobile terminal 801 and bandwidth control can also be performed.

More specifically, the communication repeater 402 also may have the same configuration as that of the bandwidth control process unit 31, the packet transmission process unit 12, and the packet transfer unit 32 shown in Fig. 3, and also may execute the same operation.

As the mobile networking system which realizes the mobility of the mobile terminal, an example of a realization by using the "Mobile IP" specified by "RFC2002" has been described. However, the present invention is not limited to the mobile networking system.

As described above, when the mobile terminal moves between the sub-networks, the home agent monitors communication qualities such as maximum transfer rates and throughputs which can be used by the sub-networks before and after the movement. When an IP packet addressed to the mobile terminal while maintaining the communication quality obtained before the movement even though the mobile terminal moves, the throughput of the IP packet addressed to the mobile terminal can be avoided from largely changing with the movement of the mobile terminal. Furthermore, it comes to be able to reduce an influence on an application.

The above embodiment describes a mobile networking system, a bandwidth control method, and the like in which, when a home agent 401 interrupts an IP packet addressed to the mobile terminal 801 and transfers it, the communication quality of the connection is monitored to maintain the same communication quality as that obtained when the mobile terminal 801 is located at the sub-network before movement even though it moves between sub-networks. However, in another embodiment, a bandwidth control method and the like in which, when a mobile terminal 801 moves between sub-networks, and when a present location is registered in a home agent 401, or when the present location is registered in a communication terminal when a "Route Optimization function" is applied, the mobile terminal 801 can designate communication quality required for the connection will be described below.

In the network shown in Fig. 1, the mobile terminal 801 is located at a sub-network 201 at the first time, and connected to a communication repeater which is a foreign agent 501.

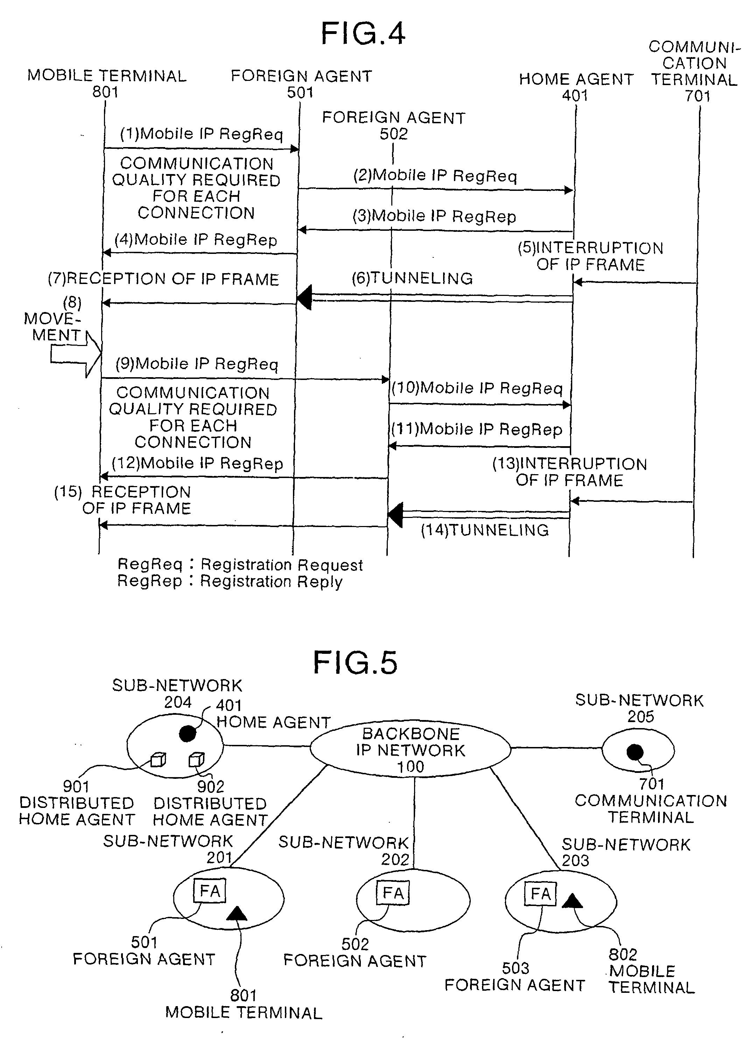

When the mobile terminal 801 moves to a sub-network 202, as shown in Fig. 4, the IP address of the foreign agent 502 which indicates the present location of the mobile terminal 801 is registered in the home agent 401 or the foreign agent 502 according to a procedure specified by "RFC2002". Fig. 4 is a diagramwhich shows an example of a process sequence in the mobile networking system according to the described embodiment.

The mobile terminal 801 transmits a message ("Mobile IP Registration Request" messages indicated by (1) and (9) in Fig. 4) which is used for registration of a present location such that information which designates communication quality required for a connection held by the mobile terminal 801 is included in the messages.

When the home agent 401 receives the message related to the location registration of the mobile terminal 801, when there is included the information which designates communication quality required for each connection, the home agent 401 extracts the information to notify to the bandwidth control process unit 31. In this manner, when an IP packet addressed to the mobile terminal 801 is transferred, the process can be performed within the notified communication quality.

The latter embodiment describes the bandwidth control of communication quality for an IP packet addressed to the mobile terminal 801 in the home agent 401. However, when a communication terminal 701 which communicates with the mobile terminal 801 by the Route Optimization function or the like communicates with the mobile terminal 801 without mediating the home agent 401, bandwidth control of the IP packet addressed to the mobile terminal 801 can also be performed in the communication terminal 701 by adding information which designates communication quality required for each connection to a message used when the mobile terminal 801 notifies the present location to the communication terminal 701.

As described above, when the mobile terminal moves between the sub-networks, according to communication quality required from the mobile terminal, the home agent transfers an IP packet addressed to the mobile terminal while maintaining communication quality obtained before the movement even though the mobile terminal moves, so that the throughput of the IP packet addressed to the mobile terminal can be avoided from largely changing with the movement of the mobile terminal. Furthermore, it comes to be able to reduce an influence on an application.

Each of the above mentioned embodiments describes the method in which a home agent controls the transfer of an IP packet addressed to a mobile terminal. However, a communication system which performs the process in which a home agent transfers an IP packet addressed to a mobile terminal to a specific communication repeater (called a "distributed home agent" hereinafter) and the distributed home agent transfers the IP packet addressed to the mobile terminal to a present location by the tunneling method, monitor of communication quality of each connection, and bandwidth control will be described in the following embodiment.

Like Fig. 1, Fig. 5 is a diagram which shows an example of a mobile networking system in which a mobile terminal can perform communication at various destinations in a network in which a plurality of sub-networks are connected to each other. The mobility of the mobile terminal is realized by "Mobile IP" specified by "RFC2002".

In this network, a sub-network 204 has not only a home agent 401 but also distributed home agents (901 and 902). A distributed home agent which performs a process for a mobile terminal 801 is 901, and a distributed home agent which performs a process for a mobile terminal 802 is 902.

When the home agent 401 interrupts an IP packet addressed to the mobile terminal 801, the home agent 401 transfers the interrupted IP packet to the distributed home agent 901, and the distributed home agent 901 transfers the IP packet addressed to the mobile terminal 801 to the IP address of a foreign agent 501 which indicates a present location of the mobile terminal 801 by the tunneling method.

On the other hand, when the home agent 401 interrupts an IP packet addressed to the mobile terminal 802, it transfers the interrupted IP packet to the distributed home agent 902, and the distributed home agent 902 transfers the IP packet addressed to the mobile terminal 802 to the IP address of a foreign agent 503 which indicates a present location of the mobile terminal 802 by the tunneling method.

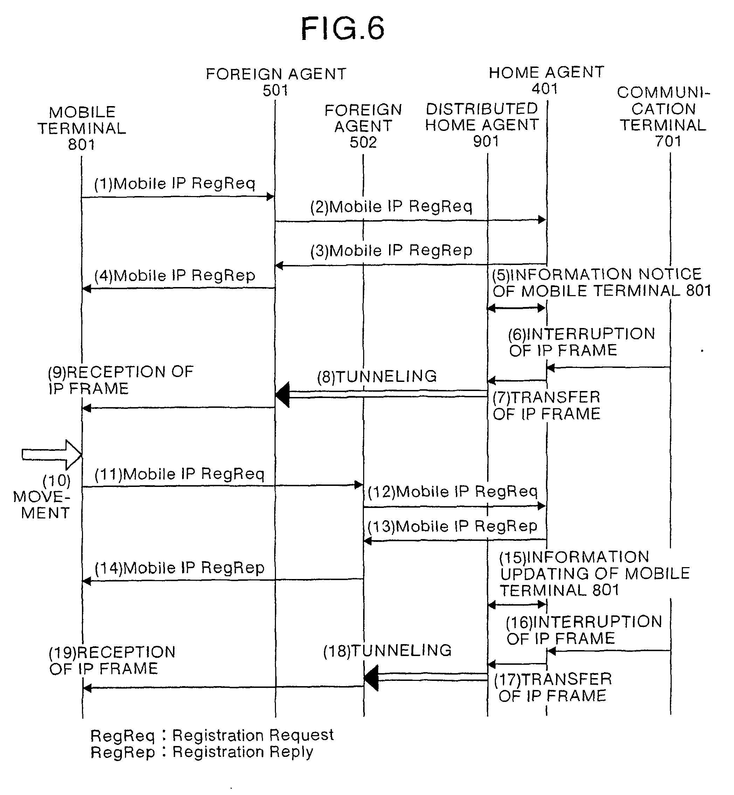

Fig. 6 is a diagram which shows an example of a process sequence in the mobile networking system, according to Fig.5, in which distributed home agents exist.

As shown in Fig. 6, when the mobile terminal 801 registers a present location (by transmission of "Mobile IP Registration Request" messages indicated by (1) and (2) in Fig. 6) in the home agent 401 in the sub-network 201 at the first time, the home agent 401 selects a proper distributed home agent (the distributed home agent 901) from distributed home agents managed by the home agent 401 itself, and notifies information related to the mobile terminal 801 to the selected distributed home agent 901 (information notice of the mobile terminal 801 indicated by (5) in Fig. 6).

When the home agent 401 interrupts the IP packet addressed to the mobile terminal 801 ((6) in Fig. 6), it transfers the interrupted IP packet to the corresponding distributed home agent 901.

On the other hand, when the distributed home agent 901 receives the IP packet transferred from the home agent 401, depending on a destination of the received IP packet, it transfers to the present location of the mobile terminal 801 by the tunneling method on the basis of the information notified from the home agent 401.

When the mobile terminal 801 moves to a sub-network 202, the mobile terminal 801 registers the IP address of the foreign agent 502 which indicates the present location in the home agent 401 (by transmission of "Mobile IP Registration Request" messages indicated by (11) and (12) in Fig. 6).

When the home agent 401 receives the contents registered by the mobile terminal 801, the registered information is changed for the distributed home agent 901 corresponding to the mobile terminal 801 (information updating of the mobile terminal 801 indicated by (15) in Fig. 6).

The information related to the mobile terminal and notified to each distributed home agent by the home agent 401 can include not only the present location of the mobile terminal but also communication quality notified from the mobile terminal and required for each connection.

When the distributed home agent transfers the IP packet addressed to the mobile terminal to the present location by tunneling, it monitors the transferred IP packet and can also perform bandwidth control.

As described above, a process which is performed by the home agent alone in a conventional technique is performed by the distributed home agent depending on the mobile terminal, so that a load on the home agent can be reduced. Furthermore, a scalable system can be realized.

Of the processes described in the embodiments, all or some of the processes which are described as processes which are automatically performed can also be manually performed, otherwise, all or some of the processes which are described as processes which are manually performed can also be automatically performed.

In addition, the procedures, the control procedures, the concrete names, pieces of information including parameters such as various registration data and searching conditions, the screens, and the database configurations described in the above documents and drawings can be changed unless these are specially described.

The shown constituent elements are functionally conceptual, and are not always physically constituted as shown in the drawings.

For example, all or arbitrary some of the process functions held by the home agent, the foreign agent, the communication repeater, the communication terminal, the mobile terminal, and the like can be realized by a computer or a computer program which can be interpreted and executed by the computer, otherwise, can be realized as hardware achieved by a wired logic. The computer program is recorded on a recording medium (will be described later) and mechanically read by the devices as needed.

The computer program according to the present invention can also be stored in a computer readable recording medium. The "recording medium" includes an arbitrary "portable physical media" such as a floppy disk, a photomagnetic disk, a ROM, an EPROM, an EEPROM, a CD-ROM, an MO, or a DVD, an arbitrary "fixed physical media" such as a ROM, a RAM, or an HD built in various computer systems, or a "communication medium", which holds a computer program for a short period of time, such as a communication line or a carrier wave which is represented by a LAN, a WAN, and the internet and is used when a computer program is transmitted through a network.

The "computer program" is a data process method described by an arbitrary language or a descriptive method, and can employ any form such as a source code or a binary code. The "computer program" is not always singularly constituted and it includes those which are separately constituted as a plurality of modules or libraries or that which achieves the functions in cooperation with independent computer programs which are represented by an OS (Operating System). As the concrete configuration for reading the recording media in the devices described in the embodiments, the reading procedure, the install procedure which is executed after the reading, or the like, known configurations and procedures can be used.

As described above, according to the present invention, the present location of the mobile terminal is managed, when the IP packet addressed to the mobile terminal is transferred before and after the movement of the mobile terminal between the sub-networks, bandwidth control is performed to maintain communication quality obtained before the movement, and the IP packet addressed to the mobile terminal is transferred to the foreign agent being at the present location. For this reason, the throughput of the IP packet addressed to the mobile terminal can be avoided from largely changing with the movement of the mobile terminal. Furthermore, it comes to be able to reduce the influence on an application.

According to the present invention, the communication quality of the transmission frame is monitored every connection when the IP packet addressed to the mobile terminal is transferred, and the bandwidth control is performed such that the IP packet addressed to the mobile terminal is transferred while maintaining the communication quality monitored before the movement even though the mobile terminal moves. For this reason, when the mobile terminal moves between the sub-networks, communication qualities such as a maximum transfer rate or a throughput which can be used in the sub-networks before and after the movement are monitored to make it possible to avoid the throughput of the IP packet addressed to the mobile terminal from largely changing with the movement of the mobile terminal. Furthermore, it comes to be able to reduce an influence on an application.

According to the present invention, when communication quality obtained after movement of the mobile terminal is higher than communication quality obtained before the movement, bandwidth control is performed such that communication quality obtained before the movement is maintained, and when the communication quality obtained before the movement of the mobile terminal is higher than the communication quality obtained after the movement, bandwidth control is performed according to the communication quality obtained after the movement. For this reason, it is possible to maintain communication quality before and after the movement as high as possible.

According to the present invention, since the mobile terminal transmits a message which is used for registration of the present location such that it includes the information which is used for designation of the communication quality required for the connection which communicates the IPpacket, required communication quality can be registered in location registration of the mobile terminal. More specifically, when the mobile terminal moves between sub-networks, depending on the communication quality required from the mobile terminal, the home agent transfers the IP packet addressed to the mobile terminal while maintaining the communication quality obtained before the movement even though the mobile terminal moves to make it possible to avoid the throughput of the IP packet addressed to the mobile terminal from largely changing with the movement of the mobile terminal. Furthermore, it comes to be able to reduce an influence on an application.

According to the present invention, the home agent is connected to the plurality of distributed home agents which manage the mobile terminal, and, when it receives the IP packet addressed to the mobile terminal, it transfers the IP packet to the distributed home agents which manage the mobile terminal. For this reason, a process which is performed by the home agent alone in a conventional technique is performed by the distributed home agent depending on the mobile terminal, so that a load on the home agent can be reduced. Furthermore, a scalable system can be realized.

## Claims

1. A communication terminal (701) used in a mobile networking system in which a plurality of sub-networks (201 to 205) are connected to each other and which has a home agent (401) which manages a present location of a mobile terminal (801), a foreign agent (501) which manages the mobile terminal (801) existing in each sub-network, and a communication terminal (701) which transmits an IP packet addressed to the mobile terminal (801), so as to make it possible to perform communication even though the mobile terminal (801) moves between the sub-networks (201 to 205) the communication terminal (701) comprising:
a bandwidth control unit (31) which, when the IP packet addressed to the mobile terminal (801) is transferred before and after movement of the mobile terminal (801) between the sub-networks (201 to 205), performs bandwidth control to maintain communication quality obtained before the movement; and
a packet transmission unit (32) which transmits the IP packet addressed to the mobile terminal (801) to the foreign agent (501) being at the present location.

2. The communication terminal (701) according to claim 1, further comprising a transmission frame monitoring unit (33) which monitors communication quality of a transmission frame per, connection when the IP packet addressed to the mobile terminal (801) is transferred,
wherein the bandwidth control unit (31) performs bandwidth control such that the IP packet addressed to the mobile terminal (801) is transferred while maintaining the communication quality monitored by the transmission frame monitoring unit (33) before the movement even though the mobile terminal (801) moves.

3. The communication terminal (701) according to claim 1 or 2, wherein
when the communication quality obtained after the movement of the mobile terminal (801) is higher than the communication quality obtained before the movement, the bandwidth control unit (31) performs bandwidth control such that communication quality obtained before the movement is maintained, and
when the communication quality obtained before the movement is higher than the communication quality obtained after the movement, the bandwidth control unit (31) performs bandwidth control according to the communication quality obtained after the movement.

4. The communication terminal (701) according to any one of claims 1 to 3 wherein the mobile terminal (801) transmits a message to register the present location, the message including information for designating the communication quality required for the connection which communicates the IP packet.

5. The communication terminal (701) according to any one of claims 1 to 4, wherein the home agent (401) is connected to a plurality of distributed home agent (401) s which manage the mobile terminal (801), and
when the home agent (401) receives the IP packet addressed to the mobile terminal (801), the home agent (401) transfers the IP packet to the distributed home agent (401) s which manage the mobile terminal (801).

## Patentansprüche

1. Kommunikationsendgerät (701), das in einem mobilen Netzwerksystem verwendet wird, in welchem mehrere Subnetzwerke (201 bis 205) miteinander verbunden sind und das einen Heimverwalter (401), der einen gegenwärtigen Ort eines mobilen Endgeräts (801) verwaltet, einen Fremdverwalter (501), der das in jedem Subnetzwerk bestehende mobile Endgerät (801) verwaltet, und ein Kommunikationsendgerät (701), das ein an das mobile Endgerät (801) adressiertes IP-Paket überträgt, aufweist, um eine Kommunikation zu ermöglichen, obgleich sich das mobile Endgerät (801) zwischen den Subnetzwerken (201 bis 205) bewegt, welches Kommunikationsendgerät (701) aufweist:
eine Bandbreiten-Steuereinheit (31), die, wenn das an das mobile Endgerät (801) adressierte IP-Paket vor und nach der Bewegung des mobilen Endgeräts (801) zwischen den Subnetzwerken (201 bis 205) übertragen wird, eine Bandbreitensteuerung durchführt, um die vor der Bewegung erhaltene Kommunikationsqualität aufrecht zu erhalten; und
eine Paketübertragungseinheit (32), die das an das mobile Endgerät (801) adressierte IP-Paket zu dem Fremdverwalter (501), der sich an der gegenwärtigen Stelle befindet, überträgt.

2. Kommunikationsendgerät nach Anspruch 1, weiterhin aufweisend eine Übertragungsrahmen-Überwachungseinheit (33), die die Kommunikationsqualität eines Übertragungsrahmens pro Verbindung überwacht, wenn das an das mobile Endgerät (801) adressierte IP-Paket übertragen wird, wobei die Bandbreiten-Steuereinheit (31) eine Bandbreitensteuerung derart durchführt, dass das an das mobile Endgerät (801) adressierte IP-Paket übertragen wird, während die durch die Übertragungsrahmen-Überwachungseinheit (33) überwachte Kommunikationsqualität vor der Bewegung aufrecht erhalten wird, obgleich sich das mobile Endgerät (801) bewegt.

3. Kommunikationsendgerät (701) nach Anspruch 1 oder 2, bei dem,
wenn die nach der Bewegung des mobilen Endgerät (801) erhaltene Kommunikationsqualität höher als die vor der Bewegung erhaltene Kommunikationsqualität ist, die Bandbreiten-Steuereinheit (31) eine Bandbreitensteuerung derart durchführt, dass die vor der Bewegung erhaltene Kommunikationsqualität aufrecht erhalten wird, und,
wenn die vor der Bewegung erhaltene Kommunikationsqualität höher als die nach der Bewegung erhaltene Kommunikationsqualität ist, die Bandbreiten-Steuereinheit (31) eine Bandbreitensteuerung entsprechend der nach der Bewegung erhaltenen Kommunikationsqualität durchführt.

4. Kommunikationsendgerät (701) nach einem der Ansprüche 1 bis 3, bei der das mobile Endgerät (801) eine Nachricht überträgt, um den gegenwärtigen Ort zu registrieren, welche Nachricht Informationen zum Bezeichnen der erforderlichen Kommunikationsqualität für die Verbindung, die das IP-Paket überträgt, enthält.

5. Kommunikationsendgerät (701) nach einem der Ansprüche 1 bis 4, bei dem der Heimverwalter (401) mit mehreren verteilten Heimverwaltern (401) verbunden ist, die das mobile Endgerät (801) verwalten, und
wenn der Heimverwalter (401) das an das mobile Endgerät (801) adressierte IP-Paket empfängt, der Heimverwalter (401) das IP-Paket zu den verteilten Heimverwaltern (401) überträgt, die das mobile Endgerät (801) verwalten.

## Revendications

1. Terminal de communication (701) utilisé dans un système de réseau mobile dans lequel une pluralité de sous-réseaux (201 à 205) sont connectés les uns aux autres et qui comporte un agent domestique (401) qui gère un emplacement actuel d'un terminal mobile (801), un agent étranger (501) qui gère le terminal mobile (801) existant dans chaque sous-réseau, et un terminal de communication (701) qui transmet un paquet IP adressé au terminal mobile (801) de manière à lui permettre d'effectuer une communication, bien que le terminal mobile (801) se déplace entre les sous-réseaux (201 à 205), le terminal de communication (701) comprenant :
une unité (31) de commande de bande passante qui, lorsque le paquet IP adressé au terminal mobile (801) est transféré avant et après déplacement du terminal mobile (801) entre les sous-réseaux (201 à 205), effectue une commande de bande passante pour maintenir la qualité de communication obtenue avant le déplacement ; et
une unité (32) de transmission de paquet qui transmet le paquet IP adressé au terminal mobile (801) à l'agent étranger (501) qui est à l'emplacement actuel.

2. Terminal de communication (701) selon la revendication 1, comprenant en outre une unité (33) de surveillance de trame de transmission qui surveille la qualité de communication d'une trame de transmission par connexion lorsque le paquet IP adressé au terminal mobile (801) est transféré,
dans lequel l'unité (31) de commande de bande passante effectue une commande de bande passante de telle sorte que le paquet IP adressé au terminal mobile (801) est transféré tout en maintenant la qualité de communication surveillée par l'unité (33) de surveillance de trame de transmission avant le déplacement, bien que le terminal mobile (801) se déplace.

3. Terminal de communication (701) selon la revendication 1 ou 2, dans lequel
lorsque la qualité de communication obtenue après le déplacement du terminal mobile (801) est supérieure à la qualité de communication obtenue avant le déplacement, l'unité (31) de commande de bande passante effectue une commande de bande passante de telle sorte que la qualité de communication obtenue avant le déplacement, est maintenue, et
lorsque la qualité de communication obtenue avant le déplacement est supérieure à la qualité de communication obtenue après le déplacement, l'unité (31) de commande de bande passante effectue une commande de bande passante conformément à la qualité de communication obtenue après le déplacement.

4. Terminal de communication (701) selon l'une quelconque des revendications 1 à 3, dans lequel le terminal mobile (801) transmet un message pour indiquer l'emplacement actuel, le message incluant une information pour désigner la qualité de communication requise pour la connexion qui communique le paquet IP.

5. Terminal de communication (701) selon l'une quelconque des revendications 1 à 4, dans lequel l'agent domestique (401) est connecté à une pluralité d'agents domestiques distribués (401) qui gèrent le terminal mobile (801), et
lorsque l'agent domestique (401) reçoit le paquet IP adressé au terminal mobile (801), l'agent domestique (401) transfère le paquet IP aux agents domestiques distribués (401) qui gèrent le terminal mobile (801).
